# EUROPEAN PATENT SPECIFICATION

(11) **EP 3 890 381 B1**
(45) Date of publication and mention of the grant of the patent: **06.09.2023**
(21) Application number: 21158148.3
(22) Date of filing: 19.02.2021
(51) Int. Cl.: H04W 12/02

(54) **INFORMATION COMMUNICATION DEVICE FOR VEHICLE AND METHOD FOR COMMUNICATING VEHICLE INFORMATION**
INFORMATIONSKOMMUNIKATIONSGERÄT FÜR FAHRZEUG UND VERFAHREN ZUR KOMMUNIKATION VON FAHRZEUGINFORMATIONEN
DISPOSITIF DE COMMUNICATION D'INFORMATIONS POUR VÉHICULE ET PROCÉDÉ DE COMMUNICATION D'INFORMATIONS SUR UN VÉHICULE

(30) Priority: 31.03.2020 JP 2020062833
(43) Date of publication of application: 06.10.2021
(73) Proprietor: Mazda Motor Corporation, Aki-gun Hiroshima 730-8670 (JP)
(72) Inventor: Okazaki, Eiji, Hiroshima 730-8670 (JP); Nakao, Satoshi, Hiroshima 730-8670 (JP); Kubosaki, Junichi, Hiroshima 730-8670 (JP); Niimi, Takeru, Hiroshima 730-8670 (JP); Vega Ramirez, Antonio, Hiroshima 730-8670 (JP); Horimoto, Kohei, Hiroshima 730-8670 (JP); Yoshida, Kazuki, Hiroshima 730-8670 (JP); Kaitsuka, Tsuyoshi, Hiroshima 730-8670 (JP)
(74) Representative: Behr, Wolfgang

(56) References cited:
- US-A1- 2014 309 789
- US-A1- 2015 178 999
- US-A1- 2017 178 425

## Description

### [Technical Field]

The present invention relates to an information communication device for a vehicle and a method for communicating vehicle information.

### [Background Art]

An information communication device for a vehicle has been proposed in JP-A-2019-200658 and JP-A-2016-207006. In JP-A-2019-200658, it is disclosed that an in-vehicle information collector collects vehicle information and sends the vehicle information to an information storage (an administration server) installed on the outside of the vehicle. In JP-A-2016-207006, it is disclosed that, in case of an accident, an electronic control unit (ECU) stores data in a specified period immediately before the accident.

In recent years, there is a tendency that protection of personal information has been given a great deal of importance. The vehicle information possibly includes the personal information (for example, location information) on a user (an occupant). Thus, such a condition is placed on the information communication device for a vehicle that indication of the user's intent to permit communication has to be reflected when the information communication device for a vehicle collects the vehicle information on such a vehicle and sends the vehicle information to the external information storage.

US 2015/178999 A1 is directed to secure vehicular data management with enhanced privacy, wherein a vehicle comprises at least a vehicular control architecture (VCA) for controlling operation of the vehicle and a device, wherein the VGA records operational data identifying at least one vehicle operator and vehicular operational data recorded during operation of the vehicle by the vehicle operator. The device includes a communication module and a trusted execution environment (TEE) including a privacy enforcement module (PEM), wherein the PEM receives the operational data from the VGA via the communication module, generates filtered data by filtering the operational data based on privacy settings and causes the filtered data to be transmitted via the communication module.

US 2014/309789 A1 discloses a vehicle control system including a home automation module that can receive information from a home automation system such as a presence of occupants in a home and a state of features of the home, wherein the home automation module may send commands to activate, deactivate, and/or change settings of one or more features of the home automation system based on user profile information. The commands can be modified based on the information received from the home automation system.

A storage condition setting device and a data storage system for vehicle diagnosis are known from US 2017/178425 A1.

### [Summary of the Invention]

### [Problem to be solved by the invention]

Meanwhile, the vehicle information may include information (for example, failure information) from a certain period immediately before a trigger signal input time point at which the trigger signal is received. Accordingly, even in a state where the user's communication permission is reflected to the information communication device for a vehicle, in the case where the input time point of the trigger signal for such vehicle information is a time point that is shortly after indication of the user's intent not to permit the communication is shifted to the indication of the user's intent to permit the communication, the vehicle information from a time where the user's intent was not to permit the communication (from a communication non-permission period) is possibly transmitted. The existence of such a situation is not preferred from a perspective of the protection of the personal information.

The invention is defined by the appended claims. The present invention has been made in view of the above circumstance. A first purpose of the present invention is to provide an information communication device for a vehicle capable of avoiding transmission of vehicle information from a communication non-permission period to an external information storage also in the case where the information communication device for a vehicle receives a trigger signal shortly after indication of a user's intent not to permit communication is shifted to indication of the user's intent to permit communication without changing an existing configuration to transmit the vehicle information. A second purpose of the present invention is to provide a method for communicating vehicle information that is used in the vehicle information communication device.

### [Means for solving the Problem]

In order to achieve the first purpose, the present invention has the following configurations.

In an embodiment, an information communication device for a vehicle includes a determination processing section. The determination processing section outputs an execution permission signal for permitting transmission of the vehicle information with an input state of a user permission signal as a condition, and outputs an execution restriction signal for inhibiting the transmission of the vehicle information with an input state of a user non-permission signal as a condition. Furthermore, under a condition that the input state of the user non-permission signal is switched to the input state of the user permission signal, the determination processing section still outputs the execution restriction signal in a period from such switching timing to a lapse of a specified period.

More specifically, embodiments of the present invention comprise the following configurations.
(1) An information communication device for a vehicle including a determination processing section that brings transmission of vehicle information to an external information storage into a permission state with a user permission signal input state as a condition and that brings the transmission of the vehicle information to the external information storage into a non-permission state with a user non-permission signal input state as a condition, the information communication device for a vehicle transmitting the vehicle information, which includes information from a certain period before an input time point of a specified trigger signal, to the information storage in the case where the specified trigger signal for transmitting the vehicle information to the information storage is input and where it is currently in a transmission permission state of the vehicle information, in which
   the determination processing section is configured to maintain the transmission of the vehicle information to the external information storage in the non-permission state in a period from the switching timing to a lapse of a specified period when the user non-permission signal input state is switched to the user permission signal input state.

With this configuration, in reaction to a switch to a user permission signal input state, the transmission of the vehicle information to the external information storage is brought into the transmission permission state. Meanwhile, in the case where the trigger signal is input in the period from the switching timing to the lapse of the specified period, the transmission of the vehicle information to the information storage is not permitted. Therefore, it is possible to avoid the transmission of the vehicle information from a user non-permission period to the external information storage.

(2) In a preferred embodiment, in the configuration described in (1),
an external communication section configured to be communicable with the external information storage and be able to transmit the vehicle information to the information storage is provided, and
the determination processing section is configured to maintain or bring the external communication section into a transmission prohibition state in the period from the switching timing to the lapse of the specified period under a condition that the user non-permission signal input state is switched to the user permission signal input state.

With this configuration, even in the case where the user non-permission signal is switched to the user permission signal, and the trigger signal is input at such a time point that falls within the specified period from the switching timing, the communication of the external communication section is prohibited. Therefore, it is possible to specifically avoid the transmission of the vehicle information from the user non-permission period to the external information storage.

(3) In a preferred embodiment, in the configuration described in (1),
an internal communication section that imports the vehicle information from a data collection section that collects the vehicle information corresponding to the specified trigger signal with detection of the specified trigger signal as a condition is provided, and
the determination processing section is configured to discard the vehicle information imported by the internal communication section in the period from the switching timing to the lapse of the specified period under a condition that the user non-permission signal input state is switched to the user permission signal input state.

With this configuration, even when the vehicle information is imported through the internal communication section, the determination processing section discards the confirmed vehicle information. Thus, the vehicle information itself is not transmitted to the information storage. As a result, it is possible to avoid the transmission of the vehicle information from the user non-permission period to the information storage.

(4) In a preferred embodiment, in the configuration described in (1),
an internal communication section that imports the confirmed vehicle information from a data collection section that collects the vehicle information corresponding to the specified trigger signal with detection of the specified trigger signal as a condition is provided, and
the determination processing section is configured to cause the data collection section to discard the specified trigger signal in the period from the switching timing to the lapse of the specified period under a condition that the user non-permission signal input state is switched to the user permission signal input state.

With this configuration, the trigger signal is deleted in the data collection section. In association therewith, the vehicle information that corresponds to the trigger signal is not generated. Thus, it is possible to make the transmission information no longer exist. As a result, it is possible to avoid the transmission of the vehicle information from a communication non-permission period to the information storage.

(5) In a preferred embodiment, in the configuration described in (4),
the determination processing section is configured to cause the data collection section to cancel discarding of the specified trigger signal under a condition that the specified period has elapsed.

With this configuration, after the lapse of the specified period from the switching timing, the transmission of the vehicle information is brought into the user permission state, and the trigger signal is accurately input in the user permission state. Thus, the vehicle information, which corresponds to the trigger signal, is generated by the data collection section. In association therewith, it is possible to accurately generate the vehicle information to be transmitted to the information storage.

(6) In a preferred embodiment, in the configuration described in (1),
an internal communication section and a storage section are provided. The internal communication section imports the vehicle information from data collection section that collects the vehicle information corresponding to the specified trigger signal with detection of the specified trigger signal as a condition. The storage section saves the vehicle information imported by the internal communication section.

The determination processing section is configured to delete the vehicle information saved in the storage section in the case where it is determined that the information transmission succeeds.
In the case where it is determined that information transmission to the external information storage fails, the vehicle information is not deleted and transmission is repeated.
In case that it is determined that information transmission to the information storage fails and that the user non-permission signal is input, the determination processing section deletes the vehicle information saved in the storage section.

With this configuration, even in the case where the vehicle information is repeatedly transmitted due to failure in the transmission thereof, the vehicle information is deleted from the storage section when the user indicates the intent not to permit, so as to be able to reliably reflect the user's intent. In addition, when the information is successively transmitted to the information storage, it is restricted to leave the vehicle information in the components other than the information storage. Therefore, personal information can be protected.

According to the invention the specified period is equal to or longer than the time period before the input time point of the specified trigger signal from which the vehicle information to be transmitted to the external information storage contains information.

With this configuration, in the period from the switching timing to the lapse of the specified period, it is possible to maintain the transmission of the vehicle information to the information storage into the non-permission state. It is also possible to reliably prevent the transmission of the vehicle information from the user non-permission period to the information storage in the specified period.

In an embodiment of the present invention, the time period before the input time point of the specified trigger signal is a time period immediately before the input time point.

In an embodiment of the present invention, the specified trigger signal is a server request trigger signal received from the external information storage.

In an embodiment of the present invention, the specified trigger signal is a failure signal received from a controller of a vehicle component.

In an embodiment of the present invention, in dependence on the specified trigger signal received, the vehicle information contains different information, in particular information from different time periods.

In an embodiment of the present invention, the vehicle information is collected by a data collection section from a plurality of controllers of vehicle equipment, wherein preferably at least one specified trigger signal is a failure signal of at least one out of the controllers.

In an embodiment of the present invention, the information communication device for a vehicle comprises a data collection section that constantly collects and stores information on a first in first out basis, wherein on receipt of the specified trigger signal, at least a part of the stored information is output for transmission.

In an embodiment of the present invention, the information communication device for a vehicle is configured and in particular programmed to operate as indicated herein.

In an embodiment of the present invention, the external information storage is arranged remotely from the vehicle.

In an embodiment of the present invention, the information communication device communicates with the external information storage by a wireless communication interface.

The present invention to achieve the second purpose is configured as in (8) below.

(8) In a method for communicating vehicle information, the method comprises:
on receipt of a specified trigger signal, transmitting vehicle information including information from a certain period before an input time point of the specified trigger signal to an external information storage in the case where transmission of the vehicle information to the external information storage is in a permission state, wherein transmission of the vehicle information to the external information storage is brought into the permission state in reaction to a user permission signal, where the transmission of the vehicle information to the information storage is brought into a non-permission state in reaction to a user non-permission signal,
wherein the transmission of the vehicle information to the information storage into the non-permission state is maintained in the non-permission state in a period from switching timing to a lapse of a specified period after the user non-permission signal is input.

With this configuration, it is possible to provide the method for communicating the vehicle information that is used for the information communication device for a vehicle described in (1).

In an embodiment of the present invention, the method operated an information communication device for a vehicle described above.

### [Advantage of the invention]

According to the present invention, it is possible to provide the information communication device for a vehicle and the method for communicating the vehicle information capable of avoiding the transmission of the vehicle information from the communication non-permission period to the information storage when the trigger signal is input at the time point shortly after the indication of the user's intent not to permit the communication is shifted to the intent to permit the communication without changing the existing configuration to transmit the vehicle information, which includes the information in the certain period immediately before the trigger signal input time point, to the information storage.

### [Brief Description of the Drawings]

[Fig. 1] Fig. 1 is an explanatory view for illustrating a configuration of an information communication device for a vehicle according to a first embodiment.
[Fig. 2] Fig. 2 is an explanatory view for illustrating basic actuation of the information communication device for a vehicle according to the first embodiment.
[Fig. 3] Fig. 3 is a diagram conceptually illustrating a state where a determination processing section according to the first embodiment functions as various functional elements.
[Fig. 4] Fig. 4 is an explanatory chart for illustrating a control content according to the first embodiment.
[Fig. 5] Fig. 5 is a flowchart illustrating processing executed by the determination processing section according to the first embodiment in the case where a trigger signal is a failure trigger signal.
[Fig. 6] Fig. 6 is a flowchart illustrating processing executed by the determination processing section according to the first embodiment in the case where the trigger signal is a server request trigger signal.
[Fig. 7] Fig. 7 is a flowchart illustrating processing executed by a determination processing section according to a second embodiment in the case where the trigger signal is the failure trigger signal.
[Fig. 8] Fig. 8 is a flowchart illustrating processing executed by a determination processing section according to a third embodiment in the case where the trigger signal is the failure trigger signal.

### [Modes for Carrying Out the Invention]

A description will hereinafter be made on embodiments of the invention with reference to the drawings.

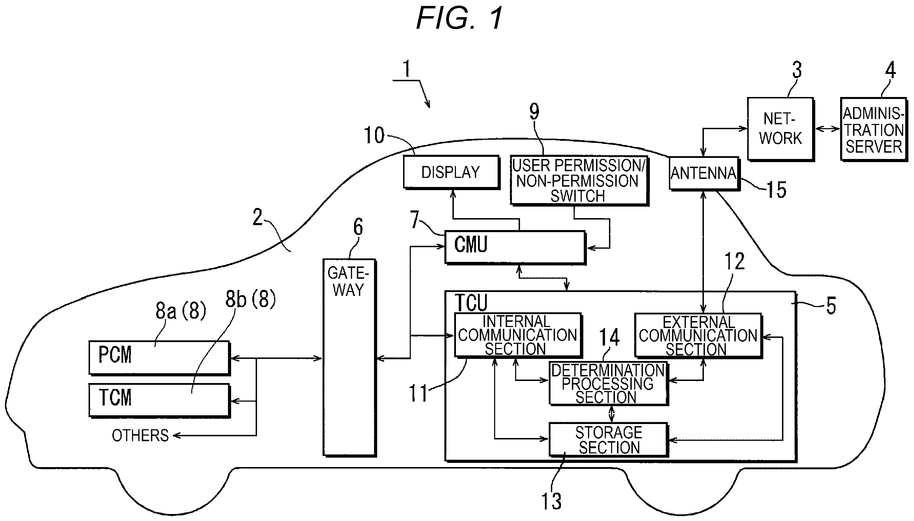

Fig. 1 to Fig. 6 illustrate a first embodiment. Fig. 1, which illustrates this first embodiment, illustrates an information communication device for a vehicle 1 that is mounted on a vehicle 2. This information communication device for a vehicle 1 coordinates transmission of vehicle information on the vehicle 2 to an administration server 4, which is an external information storage, via a network 3. Thus, this information communication device for a vehicle 1 includes a telematics communication module (TCU) 5 as a core element. A gateway 6 and a connectivity master unit (CMU) 7 are communicably connected to the TCU 5.

As illustrated in Fig. 1, the gateway 6, operating as a data collection section, is communicably connected to various ECUs (a reference numeral 8 is used as a representative reference numeral). Various ECUs 8 such as a powertrain control module (PCM) 8a and a transmission control module (TCM) 8b are provided. The PCM 8a controls fuel injection and ignition timing comprehensively with a high degree of accuracy on the basis of input signals, which indicate states of an engine in the vehicle 2 and the vehicle 2, from sensors. The TCM 8b controls a transmission. The gateway 6 receives vehicle information from each of these ECUs 8. This vehicle information is stored and sequentially updated in the gateway 6, preferably on a first in first out basis.

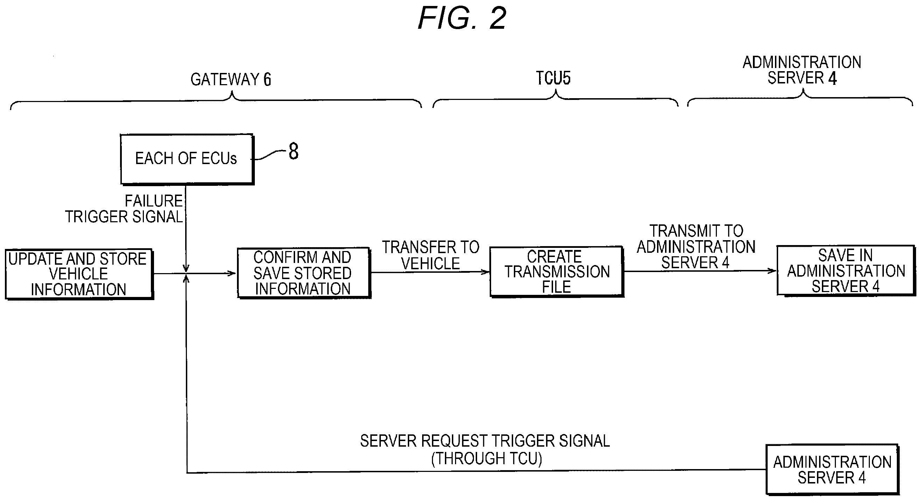

As illustrated in Fig. 2, a trigger signal is input to the gateway 6 according to a situation. As illustrated in Fig. 2, with a trigger signal input time point being a reference, the gateway 6 confirms information that is currently stored, and saves such information. In this embodiment, as the trigger signals, a failure trigger signal and a server request trigger signal are prepared. The failure trigger signal is used to notify failure at the time of such failure. The server request trigger signal is used to notify a request for the vehicle information from the administration server 4. At the time of the failure, the failure trigger signal is input from any one of the ECUs 8 to the gateway 6, and is then further input to the TCU 5. When the administration server 4 makes the request, the server request trigger signal is input from the administration server 4 to the gateway 6 through the network 3, an antenna 15 provided to the vehicle 2, and the TCU 5 (see Fig. 1 and Fig. 2).

When the failure trigger signal is input to the gateway 6, in the gateway 6, past information (data) in a period from seven seconds before current time (the certain period before the trigger signal time point), for example, is confirmed and saved with a failure trigger signal input time point being a reference. This past information is transferred from the gateway 6 to the TCU 5. When the server request trigger signal is input to the gateway 6 through the TCU 5, in the gateway 6, information in a period from the input time point to 10 seconds later, for example, is confirmed and saved with the request trigger signal being a reference. Similar to the past information, this information is transferred from the gateway 6 to the TCU 5.

As a unit that controls audio as a whole, the CMU 7 has functions of controlling input from a user (an occupant) and presentation of information on a display for the user. For this reason, as illustrated in Fig. 1, the CMU 7 includes: a user permission/non-permission switch 9 as one type of input means; and a display 10. The user permission/non-permission switch 9 may be implemented as a mechanical switch or via software, e.g. as an option to be selected in a menu. When the user operates the user permission/non-permission switch 9, in order to reflect the user's intent to the TCU 5, a user permission signal or a user non-permission signal is input to the TCU 5. The CMU 7 is also connected to the gateway 6 in a mutually communicable manner.

As illustrated in Fig. 1, the TCU 5 includes an internal communication section 11, an external communication section 12, a storage section 13, and a determination processing section 14.

The internal communication section 11 plays a role of communicating with the gateway 6 and mainly imports the information transferred from the gateway 6 into the TCU 5. The external communication section 12 sends transmission information (the vehicle information stored in the storage section 13, which will be described below, and the like) to the administration server 4 via the antenna 15 provided to the vehicle 2 and the network 3, and imports the server request trigger signal from the administration server 4 into the TCU 5 via the network 3 and the antenna 15. The storage section 13 is constructed of storage elements such as read only memory (ROM) and random access memory (RAM). The storage section 13 stores, as various necessary programs, various programs for operating the determination processing section 14, and also stores a setting condition and the like as necessary information. The determination processing section 14 reads the various programs and the like when necessary. The transfer information from the gateway 6, which is imported into the internal communication section 11, and the like are appropriately stored as necessary information in the storage section 13.

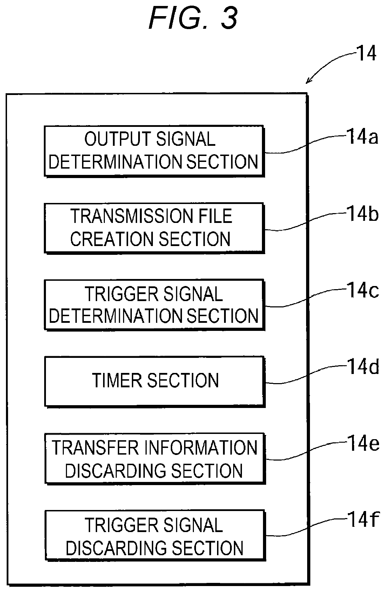

The determination processing section 14 is constructed by using a microcomputer. Under the program that is read from the storage section 13, as illustrated in Fig. 3, the determination processing section 14 functions as an output signal determination section 14a, a transmission file creation section 14b, a trigger signal determination section 14c, a timer section 14d, a transfer information discarding section 14e, and a trigger signal discarding section 14f.

When receiving the user permission signal from the user permission/non-permission switch 9, the output signal determination section 14a outputs an execution permission signal that permits transmission of the vehicle information to the administration server 4. When receiving the user non-permission signal from the user permission/non-permission switch 9, the output signal determination section 14a outputs an execution restriction signal to inhibit the transmission of the vehicle information to the administration server 4. In this embodiment, these output signals are output to the external communication section 12. When the execution permission signal is output to the external communication section 12, the external communication section 12 is permitted to transmit the vehicle information to the administration server 4 (a communication permission state). When the execution restriction signal is output to the external communication section 12, the external communication section 12 is prohibited to transmit the vehicle information to the administration server 4 (a communication unpermitted state).

The transmission file creation section 14b implements a function of coordinating the transfer information (confirmed information), which is transferred from the gateway 6, to a file to be transmitted to the administration server 4. The trigger signal determination section 14c has a function of determining an input time point and a content of the trigger signal, which is received from each of the gateway 6 and the administration server 4. In this embodiment, the trigger signal determination section 14c determines whether the trigger signal is the failure trigger signal or the server request signal and when the input time point thereof is. When the user permission signal is input to the TCU 5 in a state where the user non-permission signal is input thereto, the timer section 14d measures a specified time from such switching timing. This specified time is determined in consideration of a certain period immediately before the failure trigger signal input time point as in a case of the failure information (the vehicle information including information in a certain period immediately before the trigger signal input time point), and the specified period is preferably longer than the certain period for the above information. In the case where the gateway 6 transfers the transfer information to the TCU 5 when the user non-permission signal is input to the TCU 5 or when the time section 14d is actuated, the transfer information discarding section 14e outputs, as the execution restriction signal, a discarding order signal to the internal communication section 11 and the storage section 13, or the transfer information discarding section 14e itself implements a function of discharging the transfer information. In the case where the server request trigger signal is input to the TCU 5 in the state where the user non-permission signal is input to the TCU 5 or the timer section 14d is actuated, the trigger signal discarding section 14f implements a function of discarding the server request trigger signal.

More specifically, the information communication device for a vehicle 1 is actuated as follows.

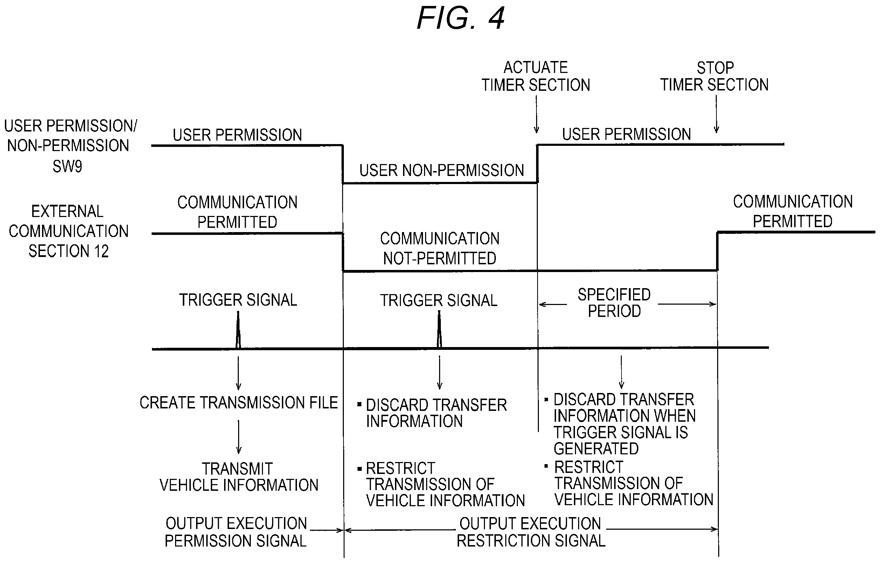

The vehicle information is constantly input to the gateway 6 from each of the ECUs 8, and the vehicle information is thereby updated and stored. In such a situation, in a state where the user permission signal is input to the TCU 5 on the basis of the operation of the user permission/non-permission switch 9 by the user (a user permission period), as illustrated in Fig. 2, in the case where the gateway 6 receives the failure trigger signal from each of the ECUs 8 or the server request trigger signal from the administration server 4 (see TRIGGER INFORMATION on a left side in Fig. 4), the stored information corresponding to the trigger signal (for example, when the failure trigger signal is input, information in a certain past period (for example, the past information for seven seconds) with the failure trigger signal input time point being the reference) is confirmed. Then, the thus-confirmed stored information is saved and transferred to the TCU 5. When the transfer information is transferred to the TCU 5, the determination processing section 14 in the TCU 5 functions as the transmission file creation section 14b so as to create the transmission file to be transmitted to the administration server 4 on the basis of the transfer information, and transfers the transmission file to the external communication section 12. At this time, the external communication section 12 receives the execution permission signal from the determination processing section 14 on the basis of the user permission state (the user permission period). Accordingly, the external communication section 12 transmits the transferred transmission file to the administration server 4 via the antenna 15 and the network 3. Then, the administration server 4 saves the transmission file as the vehicle information in a storage section (not illustrated) (acquisition and saving of the vehicle information).

Of course, in this case (a case where the user permission signal is input to the TCU 5 with the operation of the user permission/non-permission switch 9 by the user), when the trigger signal is not input to the gateway 6 and the TCU 5 (the determination processing section 14 (a trigger signal determination section 14c)), the gateway 6 neither confirms nor saves the stored information, and the confirmed stored information is not transferred to the TCU 5 from the gateway 6. In conjunction therewith, the determination processing section 14 in the TCU 5 does not function as the transmission file creation section 14b (a state where the vehicle information is not transmitted to the administration server 4 due to absence of generation of the trigger signal).

In the state where the user non-permission signal is input to the TCU 5 with the operation of the user permission/non-permission switch 9 by the user, the determination processing section 14 outputs the execution restriction signal to the external communication section 12. As a result, as illustrated in Fig. 4, the external communication section 12 is prohibited to communicate with the administration server 4. At this time, the trigger signal is input to the gateway 6 and the TCU 5, and the transfer information (the confirmed stored information) is transferred from the gateway 6 to the TCU 5. However, the determination processing section 14 discards the transfer information by outputting the execution restriction signal to the internal communication section 11 and the storage section 13 or by functioning as the transfer information discarding section 14e.

In the state where the user non-permission signal is input to the TCU 5 by the operation of the user permission/non-permission switch 9 by the user, when the user non-permission signal is switched to the user permission signal, as illustrated in Fig. 4, the same processing as the above-described processing in state where the user non-permission signal is input to the TCU 5 is executed on the basis of the output of the execution restriction signal from the determination processing section 14 during a specified period in which the timer section 14d is actuated. That is, the communication of the external communication section 12 is prohibited. In the case where the trigger signal is input at the time, the transfer information from the gateway 6 is discarded. This is done to avoid the transmission of the failure information in a user non-permission state, which is caused by the input of the failure trigger signal at such timing that is immediately after the user non-permission state is switched to the user permission state. Thereafter, when a specified period elapses from initiation of actuation of the timer section 14d, the same processing as the processing that is executed when the above-described user permission signal is input to the TCU 5 is executed.

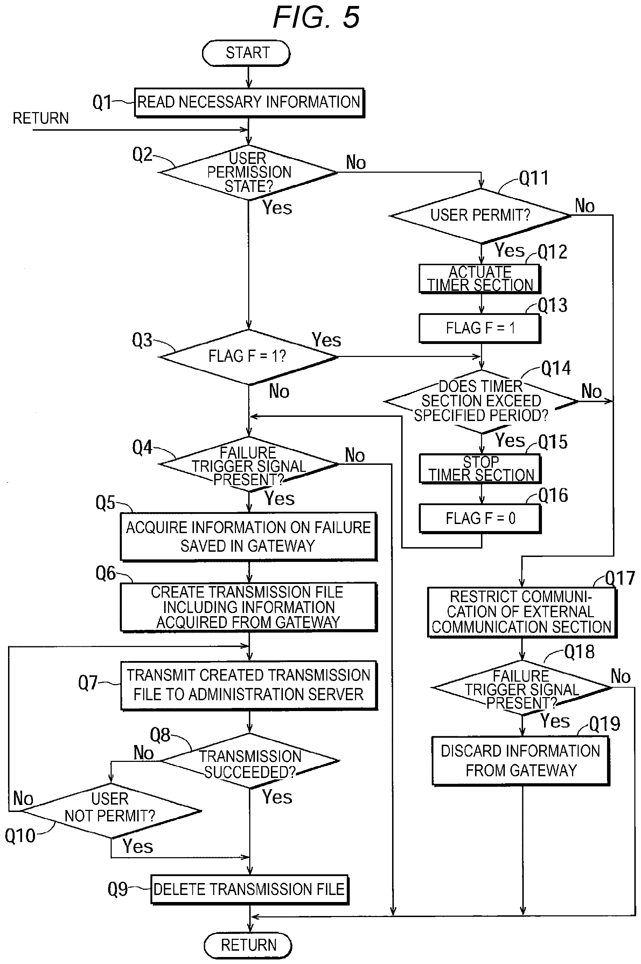

A specific description will be made on a determination processing content by the TCU 5, and the like with reference to a flowchart illustrated in Fig. 5. Here, Q denotes a step.

First, in Q1, necessary information is read. More specifically, as the necessary information, a flag F = 0 indicating that the timer section 14d is not actuated, and the like are read. In next Q2, in regard to the transmission of the information to the administration server 4, it is determined whether it is currently in a state where the user indicates the intent to permit the communication (a user permission signal input state). This is because, when the information is provided to the administration server 4, it is required to respect the indication of the user's intent and to consider a personal information protection law in each country.

If Q2 is YES, in Q3, it is determined whether the flag is F = 1, and is determined whether the timer section 14d is actuated. Shortly after activation, F = 0. Thus, the processing proceeds to Q4, and in Q4, it is determined whether the failure trigger signal is transmitted from each of the ECUs 8. This is done to recognize whether the failure information is generated in the vehicle 2. Thus, if Q4 is NO, the processing returns. On the other hand, if Q4 is YES, in Q5, the TCU 5 acquires information on the failure that is saved in the gateway 6 (information that includes information in a specified period immediately before the failure trigger signal input time point with the failure trigger signal input time point being the reference). Then, in Q6, the TCU 5 creates the transmission file that includes information on the failure in Q5, and saves the transmission file in the storage section 13. At this time, the information on the failure includes personal information such as location information. After the transmission file is created in Q6, in next Q7, the transmission file is transmitted to the administration server 4 via the external communication section 12 and the network 3.

After the transmission file is transmitted in Q7, in Q8, it is determined whether the transmission has been succeeded on the basis of a reply from the administration server 4, or the like. This is because the transmission is basically repeated in the case where the transmission fails. Meanwhile, in the case where the transmission has succeeded, processing to prevent the information from being left in various sections is executed from a perspective of the protection of the personal information. Thus, if Q8 is YES, in Q9, the transmission file that is saved in the storage section 13 is deleted. On the other hand, if Q8 is NO, in Q10, it is determined whether the user indicates the intent not to permit the communication (the input of the user non-permission signal) in regard to the transmission to the administration server 4. If Q10 is NO, the processing returns to Q7, and the transmission file is repeatedly transmitted. On the other hand, if Q10 is YES and the user indicates the intent not to permit the communication, the user's intent is respected, and the processing proceeds to Q9.

If Q2 is NO, in Q11, it is determined whether the user operates (switches) to change from the indication of the intent not to permit the transmission to the administration server 4 to the indication of the intent to permit the transmission to the administration server 4. This is because the failure information includes the information in the past certain period with a failure trigger being a reference, the information during user non-permission is possibly transmitted due to the operation to change the indication of the user's intent to communicate, and thus it is determined whether to handle such a problem. For this reason, if Q11 is YES, in Q12, the timer section 14d starts being actuated. Then, after the flag F is set to F = 1 in Q13, in Q14, it is determined whether a specified period has elapsed from the initiation of the actuation. If Q14 is YES, in Q15, the timer section 14d is stopped. In Q16, the flag F is reset to F = 0. Thereafter, the processing proceeds to Q4 such that the processing returns to the fundamental processing in the communication permission state by the user.

On the other hand, if Q14 is NO, in order to restrict the transmission of the information to the administration server 4 that is based on the failure trigger signal input in the specified period from the initiation of the actuation of the timer section 14d, in Q17, the determination processing section 14 outputs the execution restriction signal to the external communication section 12, and prohibits the communication of the external communication section 12 with the administration server 4. Then, in next Q18, it is determined whether the failure trigger signal is generated. If Q18 is NO, the processing returns. On the other hand, if Q18 is YES, in Q19, the information on the failure, which is transmitted from the gateway 6, is discarded. Thereafter, the processing returns.

If Q11 is NO, it is currently in a state where the user does not permit the transmission of the information to the administration server 4. At this time, in order to prevent the transmission of the information to the administration server 4, the processing proceeds to Q17.

If Q3 is YES, the timer section 14d is actuated. At this time, the processing proceeds to Q14.

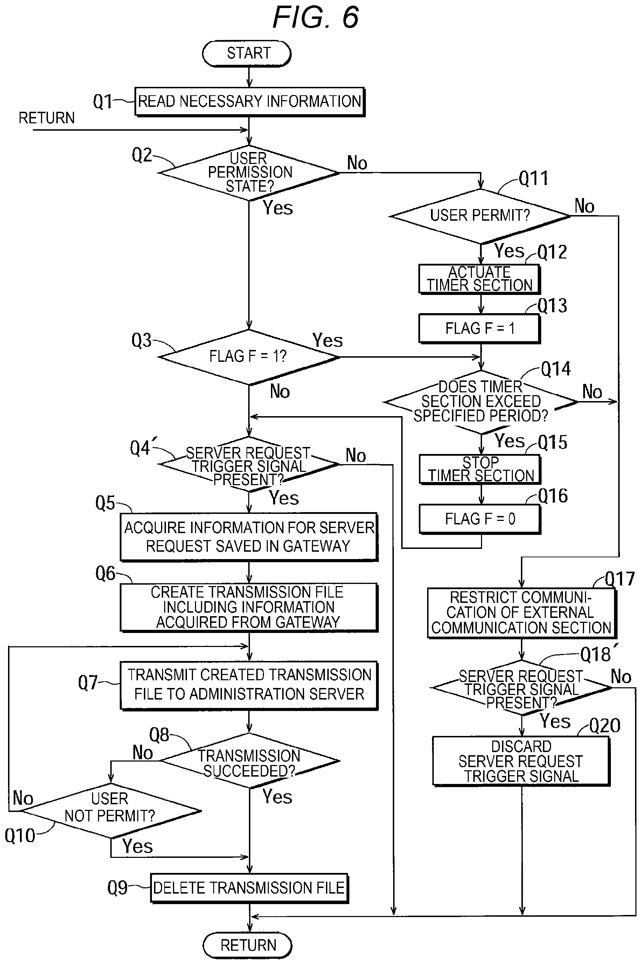

Fig. 6 illustrates a flowchart in the case where the administration server 4 requests the vehicle information to the TCU 5. Also, in this case, processing is similar to the processing in the case where the failure trigger signal is transmitted from each of the ECUs 8. Thus, in Fig. 6, the same processing as the processing in Fig. 5 will be denoted by the same reference signs and numerals as those in Fig. 5 and will not be described. A description will be made on different processing. In this case, in Fig. 6, the reference signs and numerals of the processing that corresponds to the processing in Fig. 5 will be added with "'", and new processing will be denoted by new reference signs and numerals.

In regard to the transmission of the information to the administration server 4, in the state where the user indicates the intent to permit the communication (the user permission signal input state) (Q2 YES, Q3 NO), in Q4', it is determined whether the server request trigger signal is transmitted. If it is determined that the server request trigger signal is transmitted (Q4' YES), the processing in Q5 to Q10 described above is executed. If it is determined that the server request trigger signal is not transmitted (Q4' NO), the processing returns without importing the information for request to the administration server 4 from the gateway 6, and the like.

In the case where the user does not indicate the intent to permit the communication in regard to the transmission of the information to the administration server 4 (the input state of the communication non-permission signal: Q2 NO) and where the timer section 14d is actuated by the switching operation of the user permission/non-permission switch 9 (Q11 YES, Q12) but an actuation period of the timer section 14d does not exceed the specified period (Q14 NO), in Q17, the determination processing section 14 outputs the execution restriction signal to the external communication section 12 and prohibits the communication of the external communication section 12 with the administration server 4. Then, in next Q18', it is determined whether the server request trigger signal is transmitted (Q18'). If it is determined that the server request trigger signal is not transmitted (Q18' NO), the processing returns. On the other hand, if it is determined that the server request trigger signal is transmitted (Q18' YES), in Q20, the determination processing section 14 (the transfer information discarding section 14e) discards the server request trigger signal. As a result, the server request trigger signal is not transferred to the gateway 6. In association therewith, information on the vehicle information is not transferred from the gateway 6, and thus the TCU 5 does not acquire such information to create the transmission file (a transmission restriction state for the administration server 4).

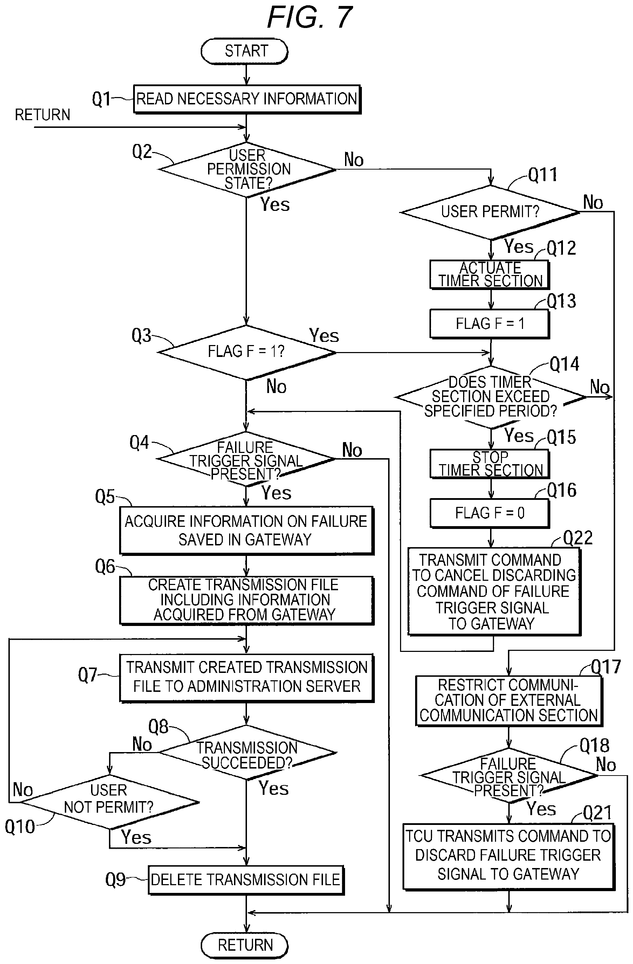

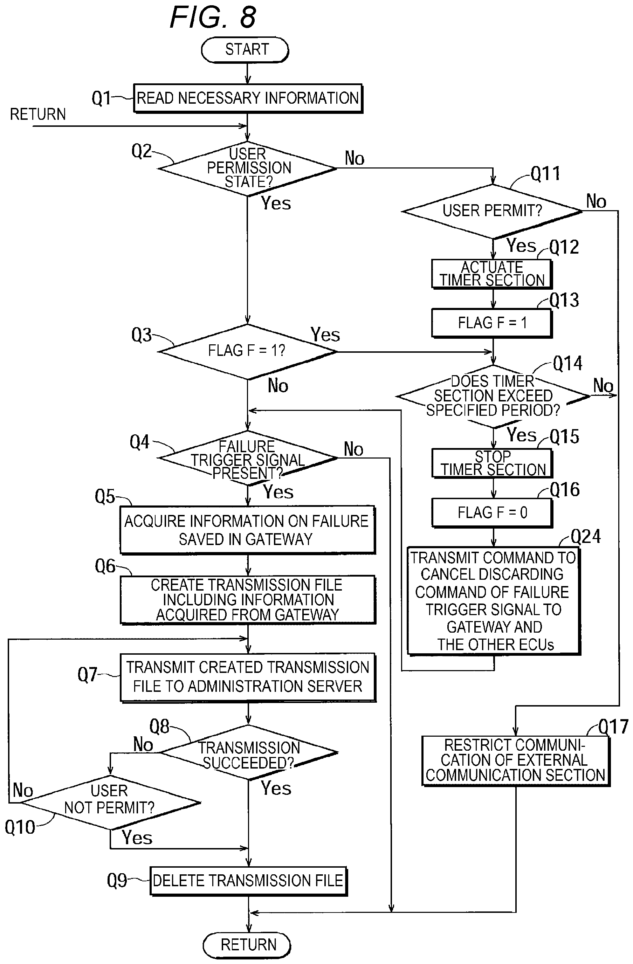

Fig. 7 illustrates a second embodiment, and Fig. 8 illustrates a third embodiment. In each of these embodiments, the same components as those in the first embodiment will be denoted by the same reference signs and numerals, and a description thereon will not be made.

The second embodiment illustrated in Fig. 7 corresponds to a modified example of the first embodiment. In the case where the failure trigger signal is input during the actuation of the timer section 14d, the TCU 5 restricts the communication of the external communication section 12 and commands the gateway 6 to discard the failure trigger signal.

In this second embodiment, if Q11 is NO (the user non-permission signal input state), or if Q14 is NO (during the actuation of the timer section 14d), in order to restrict the transmission of the information to the administration server 4 that is based on the failure trigger signal input in the specified period from the initiation of the actuation of the timer section 14d, in Q17, the determination processing section 14 outputs the execution restriction signal to the external communication section 12, and prohibits the communication of the external communication section 12 with the administration server 4. Then, in next Q18, it is determined whether the failure trigger signal is generated. If Q18 is NO, the processing returns. On the other hand, if Q18 is YES, in Q21, as the execution restriction signal, a command signal for discarding the failure trigger signal is transmitted to the gateway 6. As a result, the gateway 6 can no longer collect the information on the failure itself. Thus, the gateway 6 cannot transmit such information to the TCU 5, and the determination processing section 14 cannot create the transmission file to the administration server 4.

On the other hand, in the case where the actuation period of the timer section 14d exceeds the specified period and thus the timer section 14d is stopped (Q15), the flag F is reset (Q16). Thereafter, in Q22, a discarding cancellation command signal of the failure trigger signal is transmitted to the gateway 6. Then, the processing returns to Q4 so as to execute the processing in the user permission state.

The third embodiment illustrated in Fig. 8 corresponds to further another modified example of the first embodiment. When the user indicates the intent not to permit the communication, or when the timer section 14d is actuated, the determination processing section 14 restricts the communication of the external communication section 12, and also commands the other ECUs 8 in the vehicle 2 including the gateway 6 to discard the failure trigger signal.

In this third embodiment, if Q11 is NO (when the user non-permission signal is input), the processing directly proceeds to Q17, and the communication of the external communication section 12 with the administration server 4 is prohibited. In this case, when the user non-permission signal is output by the operation of the user permission/non-permission switch 9 by the user, the determination processing section 14 (the TCU 5) outputs, as the execution restriction signal, the signal for prohibiting the communication to the external communication section 12, and also transmits a command signal to command discarding of the failure trigger to the other ECUs 8 in the vehicle 2 including the gateway 6. In this way, if it is determined NO in Q11, the external communication section 12 immediately restricts the transmission of the information to the administration server 4, and the data to be transmitted to the administration server 4 (the confirmed information and the transmission file) itself is not created.

In this case, even in the case where the processing returns and the determination in Q11 is YES (switching to the user permission signal by the user), the discarding command of the failure trigger signal to the ECUs 8 and the gateway 6 is maintained. Thus, also, when the actuation period of the timer section 14d falls within the specified period from the initiation of the actuation, the communication of the external communication section 12 with the administration server 4 is prohibited, and the data to be transmitted to the administration server 4 (the confirmed information and the transmission file) is not created. However, in the case where the actuation period of the timer section 14d exceeds the specified period and thus the timer section 14d is stopped (Q15), the flag F is reset (Q16). Thereafter, in Q24, the determination processing section 14 transmits a command to cancel the discarding command of the failure trigger to the gateway 6 and the other ECUs 8 such that the processing returns to the processing in the communication permission signal input state. Then, the processing returns to Q4.

The description has been made so far on the embodiments. The present invention includes the following aspects.
(1) The initiation of the actuation of the timer section 14d is reserved.
(2) In the embodiment, the execution permission signal or the execution restriction signal is constantly output to the control target from the determination processing section 14, so as to maintain the state of the control target to correspond to the state of each of the output signals. Instead, the state of the control target is switched simply by outputting the single execution permission signal or the single execution restriction signal in a pulse form to the control target from the determination processing section 14, so as to maintain the state of the control target to correspond to the state of each of the output signals.
(3) The determination processing section 14 itself determines whether to transmit the vehicle information to the administration server 4 (the information storage) and transmits the vehicle information thereto.
(4) In addition to the failure trigger signal and the server request trigger signal, various signals are used as the trigger signals. Examples of the trigger signal are a signal with engine turn-off as the condition (the trigger) and a signal with output in specified cycles during travel as the condition (the trigger).

### [Industrial Applicability]

The present invention can be used to avoid the transmission of the vehicle information in the user non-permission period in the case where the trigger signal is input at the time point shortly after the indication of the user's intent not to permit the communication is switched to the indication of the user's intent to permit the communication without changing an existing configuration to transmit the vehicle information, which includes the information in the certain period immediately before the trigger signal input time point with the input time point of the trigger signal being the reference, to the information storage (the administration server 4).

### [Description of Reference Signs and Numerals]

1 Information communication device for vehicle
2 Vehicle
4 Administration server (information storage)
5 TCU
6 Gateway (equipment)
11 Internal communication section
12 External communication section
13 Storage section
14 Determination processing section

## Claims

1. An information communication device for a vehicle (1) including
a determination processing section (14) that brings transmission of vehicle information to an external information storage (4) into a permission state with a user permission signal input state as a condition and that brings the transmission of the vehicle information to the external information storage into a non-permission state with a user non-permission signal input state as a condition,
wherein on receipt of a specified trigger signal, the information communication device for a vehicle (1) transmits the vehicle information, which includes information from a time period before an input time point of the specified trigger signal, to the external information storage (4) in the case that transmission of vehicle information to an external information storage (4) is currently in a transmission permission state,
**characterized in that**
under a condition that the user non-permission signal input state is switched to the user permission signal input state, the determination processing section (14) maintains the transmission of the vehicle information to the external information storage (4) in the non-permission state for a specified period, wherein the specified period is equal to or longer than the time period before the input time point of the specified trigger signal from which the vehicle information to be transmitted to the external information storage contains information.

2. The information communication device for a vehicle (1) according to claim 1 further comprising:
an external communication section (12) configured to communicate with the external information storage (4) and to transmit the vehicle information to the external information storage (4), wherein
under a condition that the user non-permission signal input state is switched to the user permission signal input state, the determination processing section (14) maintains or brings the external communication section (12) in a transmission prohibition state in a period from said switching timing to the lapse of the specified period.

3. The information communication device for a vehicle (1) according to claim 1 further comprising:
an internal communication section (11) that imports the vehicle information from a data collection section (6) that collects the vehicle information corresponding to the specified trigger signal with detection of said specified trigger signal as a condition, wherein
under a condition that the user non-permission signal input state is switched to the user permission signal input state, the determination processing section (14) discards the vehicle information imported by the internal communication section (11) in a period from said switching timing to the lapse of the specified period.

4. The information communication device for a vehicle (1) according to claim 1 further comprising:
an internal communication section (11) that imports the vehicle information from a data collection section (6) that collects the vehicle information corresponding to the specified trigger signal with detection of said specified trigger signal as a condition, wherein
under a condition that the user non-permission signal input state is switched to the user permission signal input state, the determination processing section (14) causes the data collection section (6) to discard the specified trigger signal in the period from said switching timing to the lapse of the specified period.

5. The information communication device for a vehicle (1) according to claim 4, wherein
under a condition that the specified period has elapsed, the determination processing section (14) causes the data collection section (6) to cancel discarding of the specified trigger signal by said data collection section (6).

6. The information communication device for a vehicle (1) according to claim 1 further comprising:
an internal communication section (11) that imports the vehicle information from a data collection section (6) that collects the vehicle information corresponding to the specified trigger signal with detection of said specified trigger signal as a condition; and
a storage section (13) that saves the vehicle information imported by said internal communication section (11), and a transmission section that transmits the vehicle information stored in the storage section (13); wherein in the case where it is determined that the information transmission succeeds, the vehicle information saved in the storage section (13) is deleted,
in the case where it is determined that information transmission to the external information storage (4) fails, the vehicle information is not deleted and transmission is repeated,
and in the case that the user non-permission signal is input, the determination processing section (14) deletes the vehicle information saved in the storage section (13).

7. The information communication device for a vehicle (1) according to any one of the preceding claims, wherein
the time period before the input time point of the specified trigger signal is a time period immediately before the input time point.

8. The information communication device for a vehicle (1) according to any one of the preceding claims, wherein the specified trigger signal is a server request trigger signal received from the external information storage (4).

9. The information communication device for a vehicle (1) according to any one of the preceding claims, wherein the specified trigger signal is a failure signal received from a controller of a vehicle component.

10. The information communication device for a vehicle (1) according to any one of the preceding claims, wherein in dependence on the specified trigger signal received, the vehicle information contains different information, in particular information from different time periods.

11. The information communication device for a vehicle (1) according to any one of the preceding claims, wherein the vehicle information is collected by a data collection section (6) from a plurality of controllers of vehicle equipment, wherein preferably at least one specified trigger signal is a failure signal of at least one out of the controllers.

12. The information communication device for a vehicle (1) according to any one of the preceding claims, comprising a data collection section that constantly collects and stores information on a first in first out basis, wherein on receipt of the specified trigger signal, at least a part of the stored information is output for transmission.

13. A method for communicating vehicle information, the method comprising:
on receipt of a specified trigger signal, transmitting vehicle information including information from a time period before an input time point of the specified trigger signal to an external information storage (4) in the case where transmission of the vehicle information to the external information storage (4) is in a permission state,
wherein transmission of the vehicle information to the external information storage (4) is brought into the permission state in reaction to a user permission signal, and where the transmission of the vehicle information to the information storage (4) is brought into a non-permission state in reaction to a user non-permission signal,
**characterized in that**
the transmission of the vehicle information to the external information storage (4) is maintained in the non-permission state for a specified period after the user permission signal is input, wherein the specified period is equal to or longer than the time period before the input time point of the specified trigger signal from which the vehicle information to be transmitted to the external information storage contains information.

14. The method of claim 13, using the information communication device for a vehicle (1) according to any one of claims 1 to 12.

## Patentansprüche

1. Informationskommunikationsvorrichtung für ein Fahrzeug (1), aufweisend
einen Bestimmungsverarbeitungsabschnitt (14), der eine Übertragung von Fahrzeuginformationen an einen externen Informationsspeicher (4) in einen Genehmigungszustand mit einem Nutzer-Genehmigungssignaleingangszustand als Bedingung versetzt und der die Übertragung der Fahrzeuginformationen an den externen Informationsspeicher in einen Nichtgenehmigungszustand mit einem Nutzer-Nichtgenehmigungssignaleingangszustand als Bedingung versetzt,
wobei bei Empfang eines festgelegten Auslösesignals die Informationskommunikationsvorrichtung für ein Fahrzeug (1) die Fahrzeuginformationen, die Informationen von einem Zeitraum vor einem Eingangszeitpunkt des festgelegten Auslösesignals umfassen, an den externen Informationsspeicher (4) überträgt, wenn sich eine Übertragung der Fahrzeuginformationen an einen externen Informationsspeicher (4) gegenwärtig in einem Übertragungsgenehmigungszustand befindet,
**dadurch gekennzeichnet, dass**
unter einer Bedingung, dass der Nutzer-Nichtgenehmigungssignaleingangszustand zu dem Nutzer-Genehmigungssignaleingangszustand umgeschaltet wird, der Bestimmungsverarbeitungsabschnitt (14) die Übertragung der Fahrzeuginformationen an den externen Informationsspeicher (4) für einen festgelegten Zeitraum in dem Nichtgenehmigungszustand hält, wobei der festgelegte Zeitraum gleich oder länger ist als der Zeitraum vor dem Eingangszeitpunkt des festgelegten Auslösesignals, ab dem die an den externen Informationsspeicher zu übertragenden Fahrzeuginformationen Informationen enthalten.

2. Informationskommunikationsvorrichtung für ein Fahrzeug (1) nach Anspruch 1, ferner aufweisend:
einen externen Kommunikationsabschnitt (12), der konfiguriert ist, mit dem externen Informationsspeicher (4) zu kommunizieren und die Fahrzeuginformationen an den externen Informationsspeicher (4) zu übertragen, wobei
unter einer Bedingung, dass der Nutzer-Nichtgenehmigungssignaleingangszustand zu dem Nutzer-Genehmigungssignaleingangszustand umgeschaltet wird, der Bestimmungsverarbeitungsabschnitt (14) den externen Kommunikationsabschnitt (12) in einem Zeitraum von dem Umschaltzeitpunkt bis zu dem Ablauf des festgelegten Zeitraums in einem/einen Übertragungsverhinderungszustand hält oder versetzt.

3. Informationskommunikationsvorrichtung für ein Fahrzeug (1) nach Anspruch 1, ferner aufweisend:
einen internen Kommunikationsabschnitt (11), der die Fahrzeuginformationen von einem Datensammelabschnitt (6) importiert, der die Fahrzeuginformationen sammelt, die dem festgelegten Auslösesignal entsprechen, mit der Detektion des festgelegten Auslösesignals als Bedingung, wobei
unter einer Bedingung, dass der Nutzer-Nichtgenehmigungssignaleingangszustand zu dem Nutzer-Genehmigungssignaleingangszustand umgeschaltet wird, der Bestimmungsverarbeitungsabschnitt (14) die Fahrzeuginformationen verwirft, die durch den internen Kommunikationsabschnitt (11) in einem Zeitraum von dem Umschaltzeitpunkt bis zu dem Ablauf des festgelegten Zeitraums importiert wurden.

4. Informationskommunikationsvorrichtung für ein Fahrzeug (1) nach Anspruch 1, ferner aufweisend:
einen internen Kommunikationsabschnitt (11), der die Fahrzeuginformationen von einem Datensammelabschnitt (6) importiert, der die Fahrzeuginformationen sammelt, die dem festgelegten Auslösesignal entsprechen, mit der Detektion des festgelegten Auslösesignals als Bedingung, wobei
unter einer Bedingung, dass der Nutzer-Nichtgenehmigungssignaleingangszustand zu dem Nutzer-Genehmigungssignaleingangszustand umgeschaltet wird, der Bestimmungsverarbeitungsabschnitt (14) den Datensammelabschnitt (6) veranlasst, das festgelegte Auslösesignal in dem Zeitraum von dem Umschaltzeitpunkt bis zu dem Ablauf des festgelegten Zeitraums zu verwerfen.

5. Informationskommunikationsvorrichtung für ein Fahrzeug (1) nach Anspruch 4, wobei
unter einer Bedingung, dass der festgelegte Zeitraum abgelaufen ist, der Bestimmungsverarbeitungsabschnitt (14) den Datensammelabschnitt (6) veranlasst, das Verwerfen des festgelegten Auslösesignals durch den Datensammelabschnitt (6) aufzuheben.

6. Informationskommunikationsvorrichtung für ein Fahrzeug (1) nach Anspruch 1, ferner aufweisend:
einen internen Kommunikationsabschnitt (11), der die Fahrzeuginformationen von einem Datensammelabschnitt (6) importiert, der die Fahrzeuginformationen sammelt, die dem festgelegten Auslösesignal entsprechen, mit der Detektion des festgelegten Auslösesignals als Bedingung; und
einen Speicherabschnitt (13), der die durch den internen Kommunikationsabschnitt (11) importierten Fahrzeuginformationen speichert, und einen Übertragungsabschnitt, der die in dem Speicherabschnitt (13) gespeicherten Fahrzeuginformationen überträgt;
wobei wenn bestimmt wird, dass die Informationsübertragung erfolgreich ist, die in dem Speicherabschnitt (13) gespeicherten Fahrzeuginformationen gelöscht werden,
wenn bestimmt wird, dass die Informationsübertragung an den externen Informationsspeicher (4) fehlschlägt, die Fahrzeuginformationen nicht gelöscht werden und die Übertragung wiederholt wird,
und wenn das Nutzer-Nichtgenehmigungssignal eingegeben wird, der Bestimmungsverarbeitungsabschnitt (14) die in dem Speicherabschnitt (13) gespeicherten Fahrzeuginformationen löscht.

7. Informationskommunikationsvorrichtung für ein Fahrzeug (1) nach einem der vorhergehenden Ansprüche, wobei
der Zeitraum vor dem Eingangszeitpunkt des festgelegten Auslösesignals ein Zeitraum unmittelbar vor dem Eingangszeitpunkt ist.

8. Informationskommunikationsvorrichtung für ein Fahrzeug (1) nach einem der vorhergehenden Ansprüche, wobei das festgelegte Auslösesignal ein Serveranforderungs-Auslösesignal ist, das von dem externen Informationsspeicher (4) empfangen wird.

9. Informationskommunikationsvorrichtung für ein Fahrzeug (1) nach einem der vorhergehenden Ansprüche, wobei das festgelegte Auslösesignal ein Fehlersignal ist, das von einem Controller einer Fahrzeugkomponente empfangen wird.

10. Informationskommunikationsvorrichtung für ein Fahrzeug (1) nach einem der vorhergehenden Ansprüche, wobei in Abhängigkeit von dem empfangenen festgelegten Auslösesignal die Fahrzeuginformationen unterschiedliche Informationen, insbesondere Informationen aus unterschiedlichen Zeiträumen enthalten.

11. Informationskommunikationsvorrichtung für ein Fahrzeug (1) nach einem der vorhergehenden Ansprüche, wobei die Fahrzeuginformationen durch einen Datensammelabschnitt (6) von einer Vielzahl von Controllern einer Fahrzeugausrüstung gesammelt werden, wobei vorzugsweise mindestens ein festgelegtes Auslösesignal ein Fehlersignal mindestens eines der Controller ist.

12. Informationskommunikationsvorrichtung für ein Fahrzeug (1) nach einem der vorhergehenden Ansprüche, aufweisend einen Datensammelabschnitt, der stetig Informationen nach dem Firstin-First-out-Prinzip sammelt und speichert, wobei bei Empfang des festgelegten Auslösesignals zumindest ein Teil der gespeicherten Informationen zur Übertragung ausgegeben wird.

13. Verfahren zur Kommunikation von Fahrzeuginformationen, wobei das Verfahren umfasst:
bei Empfang eines festgelegten Auslösesignals, Übertragen von Fahrzeuginformationen, die Informationen aus einem Zeitraum vor einem Eingangszeitpunkt des festgelegten Auslösesignals umfassen, an einen externen Informationsspeicher (4), wenn sich eine Übertragung der Fahrzeuginformationen an den externen Informationsspeicher (4) in einem Genehmigungszustand befindet,
wobei die Übertragung der Fahrzeuginformationen an den externen Informationsspeicher (4) als Reaktion auf ein Nutzergenehmigungssignal in den Genehmigungszustand versetzt wird und wobei die Übertragung der Fahrzeuginformationen an den Informationsspeicher (4) als Reaktion auf ein Nutzer-Nichtgenehmigungssignal in einen Nicht-Genehmigungszustand versetzt wird,
**dadurch gekennzeichnet, dass**
die Übertragung der Fahrzeuginformationen an den externen Informationsspeicher (4) für einen festgelegten Zeitraum nach Eingabe des Nutzergenehmigungssignals in dem Nichtgenehmigungszustand gehalten wird, wobei der festgelegte Zeitraum gleich oder größer ist als der Zeitraum vor dem Eingabezeitpunkt des festgelegten Auslösesignals, ab dem die an den externen Informationsspeicher zu übertragenden Fahrzeuginformationen Informationen enthalten.

14. Verfahren nach Anspruch 13 unter Verwendung der Informationskommunikationsvorrichtung für ein Fahrzeug (1) nach einem der Ansprüche 1 bis 12.

## Revendications

1. Dispositif de communication d'informations pour un véhicule (1) comportant
une section de traitement de détermination (14), qui place la transmission d'informations de véhicule à un stockage d'informations externe (4) dans un état d'autorisation avec un état d'entrée de signal d'autorisation d'utilisateur en tant que condition et qui place la transmission des informations de véhicule au stockage d'informations externe dans un état de non-autorisation avec un état d'entrée de signal de non-autorisation d'utilisateur en tant que condition,
dans lequel à réception d'un signal de déclenchement spécifié, le dispositif de communication d'informations pour un véhicule (1) transmet au stockage d'informations externe (4) les informations de véhicule, qui comporte des informations d'une période de temps avant un moment d'entrée du signal de déclenchement spécifié si la transmission d'informations de véhicule à un stockage d'informations externe (4) se trouve actuellement dans un état d'autorisation de transmission,
**caractérisé en ce que**
si l'état d'entrée de signal de non-autorisation d'utilisateur est commuté dans l'état d'entrée de signal d'autorisation d'utilisateur, la section de traitement de détermination (14) maintient la transmission des informations de véhicule au stockage d'informations externe (4) dans l'état de non-autorisation pour une période spécifiée, dans lequel la période spécifiée est égale ou supérieure à la période de temps avant le moment d'entrée du signal de déclenchement spécifié, à partir de laquelle les informations de véhicule à transmettre au stockage d'informations externe contiennent des informations.

2. Dispositif de communication d'informations pour un véhicule (1) selon la revendication 1, comprenant en outre :
une section de communication externe (12) configurée pour communiquer avec le stockage d'informations externe (4) et pour transmettre les informations de véhicule au stockage d'informations externe (4), dans lequel
si l'état d'entrée de signal de non-autorisation d'utilisateur est commuté dans l'état d'entrée de signal d'autorisation d'utilisateur, la section de traitement de détermination (14) maintient ou place la section de communication externe (12) dans un état d'interdiction de transmission dans une période allant dudit moment de commutation au laps de la période spécifiée.

3. Dispositif de communication d'informations pour un véhicule (1) selon la revendication 1, comprenant en outre :
une section de communication interne (11) qui importe les informations de véhicule depuis une section de collecte de données (6) qui collecte les informations de véhicule correspondant au signal de déclenchement spécifié avec pour condition la détection dudit signal de déclenchement spécifié, dans lequel
si l'état d'entrée de signal de non-autorisation d'utilisateur est commuté dans l'état d'entrée de signal d'autorisation d'utilisateur, la section de traitement de détermination (14) rejette les informations de véhicule importées par la section de communication interne (11) dans une période allant dudit moment de commutation au laps de la période spécifiée.

4. Dispositif de communication d'informations pour un véhicule (1) selon la revendication 1, comprenant en outre :
une section de communication interne (11) qui importe les informations de véhicule depuis une section de collecte de données (6) qui collecte les informations de véhicule correspondant au signal de déclenchement spécifié avec pour condition la détection dudit signal de déclenchement spécifié, dans lequel
si l'état d'entrée de signal de non-autorisation d'utilisateur est commuté dans l'état d'entrée de signal d'autorisation d'utilisateur, la section de traitement de détermination (14) amène la section de collecte de données (6) à rejeter le signal de déclenchement spécifié dans la période allant dudit moment de commutation au laps de la période spécifiée.

5. Dispositif de communication d'informations pour un véhicule (1) selon la revendication 4, dans lequel
si la période spécifiée s'est écoulée, la section de traitement de détermination (14) amène la section de collecte de données (6) à annuler le rejet par la section de collecte de données (6) du signal de déclenchement spécifié.

6. Dispositif de communication d'informations pour un véhicule (1) selon la revendication 1, comprenant en outre :
une section de communication interne (11) qui importe les informations de véhicule depuis une section de collecte de données (6) qui collecte les informations de véhicule correspondant au signal de déclenchement spécifié avec pour condition la détection dudit signal de déclenchement spécifié ; et
une section de stockage (13) qui sauvegarde les informations de véhicule importées par ladite section de communication interne (11), et une section de transmission qui transmet les informations de véhicule stockées dans la section de stockage (13) ;
dans lequel s'il est déterminé que la transmission d'informations a été réalisée avec succès, les informations de véhicule sauvegardées dans la section de stockage (13) sont supprimées,
s'il est déterminé que la transmission d'informations au stockage d'informations externe (4) échoue, les informations de véhicule ne sont pas supprimées et la transmission est répétée,
et si le signal de non-autorisation d'utilisateur est entré, la section de traitement de détermination (14) supprime les informations de véhicule sauvegardées dans la section de stockage (13).

7. Dispositif de communication d'informations pour un véhicule (1) selon l'une quelconque des revendications précédentes, dans lequel
la période de temps avant le moment d'entrée du signal de déclenchement spécifié est une période de temps immédiatement avant le moment d'entrée.

8. Dispositif de communication d'informations pour un véhicule (1) selon l'une quelconque des revendications précédentes, dans lequel le signal de déclenchement spécifié est un signal de déclenchement de demande de serveur reçu du stockage d'informations externe (4).

9. Dispositif de communication d'informations pour un véhicule (1) selon l'une quelconque des revendications précédentes, dans lequel le signal de déclenchement spécifié est un signal d'échec reçu d'un dispositif de commande d'un composant de véhicule.

10. Dispositif de communication d'informations pour un véhicule (1) selon l'une quelconque des revendications précédentes, dans lequel en fonction du signal de déclenchement spécifié reçu, les informations de véhicule contiennent différentes informations, en particulier des informations provenant de différentes périodes de temps.

11. Dispositif de communication d'informations pour un véhicule (1) selon l'une quelconque des revendications précédentes, dans lequel les informations de véhicule sont collectées par une section de collecte de données (6) depuis une pluralité de dispositif de commande d'un équipement de véhicule, dans lequel de manière préférée au moins un signal de déclenchement spécifié est un signal d'échec d'au moins un parmi les dispositifs de commande.

12. Dispositif de communication d'informations pour un véhicule (1) selon l'une quelconque des revendications précédentes, comprenant une section de collecte de données qui collecte et stocke en permanence des informations sur une base premier entré, premier sorti, dans lequel à réception du signal de déclenchement spécifié, au moins une partie des informations stockées est délivrée en sortie pour la transmission.

13. Procédé de communication d'informations de véhicule, le procédé comprenant :
à réception d'un signal de déclenchement spécifié, la transmission à un stockage d'informations externe (4) d'informations de véhicule comportant des informations provenant d'une période de temps avant un moment d'entrée du signal de déclenchement spécifié si la transmission des informations de véhicule au stockage d'informations externe (4) est dans un état d'autorisation,
dans lequel la transmissions des informations de véhicule au stockage d'informations externe (4) est placée dans l'état d'autorisation en réponse à un signal d'autorisation d'utilisateur, et dans lequel la transmission des informations de véhicule au stockage d'informations (4) est placée dans un état de non-autorisation en réponse à un signal de non-autorisation d'utilisateur,
**caractérisé en ce que**
la transmission des informations de véhicule au stockage d'informations externe (4) est maintenue dans l'état de non-autorisation pour une période spécifiée après que le signal d'autorisation d'utilisateur est entré, dans lequel la période spécifiée est égale ou supérieure à la période de temps avant le moment d'entrée du signal de déclenchement spécifié, à partir de laquelle les informations de véhicule à transmettre au stockage d'informations externe contiennent des informations.

14. Procédé selon la revendication 13 utilisant le dispositif de communication d'informations pour un véhicule (1) selon l'une quelconque des revendications 1 à 12.
